Europäisches Patentamt

European Patent Office

Office européen des brevets

(11) Veröffentlichungsnummer: **0 409 984 A1**

# EUROPÄISCHE PATENTANMELDUNG
## veröffentlicht nach Art. 158 Abs. 3 EPÜ

(21) Anmeldenummer: 89900367.7

(51) Int. Cl.5: **F24F 3/14**

(22) Anmeldetag: 26.08.88

(86) Internationale Anmeldenummer:
**PCT/SU88/00168**

(87) Internationale Veröffentlichungsnummer:
**WO 90/02295 (08.03.90 90/06)**

(43) Veröffentlichungstag der Anmeldung:
**30.01.91 Patentblatt 91/05**

(84) Benannte Vertragsstaaten:
**AT CH DE FR GB IT LI NL SE**

(71) Anmelder: **KIEVSKY POLITEKHNICHESKY INSTITUT IMENI 50-LETIA VELIKOI OKTYABRSKOI SOTSIALISTICHESKOI REVOLJUTSII**
pr. Pobedy, 37
Kiev, 252056(SU)

Anmelder: **ODESSKY INZHENERNO-STROITELNY INSTITUT**
ul. Didrikhsona, 4
Odessa, 270029(SU)

(72) Erfinder: **MAISOTSENKO, Valery Stepanovich**
ul. Sadovaya, 21-7
Odessa, 270000(SU)
Erfinder: **GERSHUNI, Alexandr Naumovich**
ul. Ulyanovykh, 33-19
Kiev, 252005(SU)

(74) Vertreter: **Nix, Frank Arnold, Dr.**
Kröckelbergstrasse 15
D-6200 Wiesbaden(DE)

(54) **VERFAHREN ZUR INDIREKTEN VERDAMPFUNGSKÜHLUNG VON LUFT.**

(57) Der Hauptstrom (1) der Luft in einem Raum wird abgekühlt, indem dieser durch einen Trockenkanal (3) unter gleichzeitiger Durchlassung eines Hilfsstromes (7) von Luft, die der Atmosphäre entnommen wird, im Gegenstrom durch einen Naßkanal (9), der mit dem Trockenkanal (3) in einem Wärmeaustauschverhältnis steht, durchgelassen wird. Zur Intensivierung der Abkühlung wird der Hilfsstrom (7) in einem anderen Trockenkanal (8) vorgekült, der mit einem anderen Naßkanal (6) in einem Wärmeaustauschverhältnis steht, indem ein Teil (5) der abgekühlten Luft durch diesen Naßkanal (6) durchgelassen wird, die dem Hauptstrom (1) entnommen ist, während ein Teil (4) in den Raum zurückgeführt wird. Die Bewegung des Hilfsstromes (7) der Luft wird mittels eines Absauggeblases (10) erzeugt.

EP 0 409 984 A1

1a

VERFAHREN ZUR INDIREKTEN VERDAMPFUNGSKÜHLUNG VON LUFT

ZUSAMMENFASSUNG

Der Hauptstrom (1) der Luft in einem Raum wird abgekühlt, indem dieser durch einen Trockenkanal (3) unter gleichzeitiger Durchlassung eines Hilfsstromes (7) von Luft, die der Atmospnäre entnommen wird, im Gegenstrom durch einen Naßkanal (9), der mit dem Trockenkanal (3) in einem Wärmeaustauschverhältnis steht, durchgelassen wird.

Zur Intensivierung der Abkühlung wird der Hilfsstrom (7) in einem anderen Trockenkanal (8) vorgekühlt, der mit einem anderen Naßkanal (6) in einem Wärmeaustauschverhältnis steht, indem ein Teil (5) der abgekühlten Luft durch diesen Naßkanal (6) durchgelassen wird, die dem Hauptstrom (1) entnommen ist, während ein Teil (4) in den Raum zurückgeführt wird. Die Bewegung des Hilfsstromes (7) der Luft wird mittels eines Absauggeblases (10) erzeugt.

# VERFAHREN ZUR INDIREKTEN VERDAMPFUNGSKUHLUNG VON LUFT

## Gebiet der Technik

Die vorliegende Erfindung bezieht sich auf Verfahren zur Abkühlung von Luft unter Ausnutzung der Wärmeaustauscherapparate vom Typ der Apparate zur indirekten Verdampfung und kann besonders erfolgreich zur Luftkühlung in Räumen eingesetzt werden, welche aus technologischen Gründen oder hinsichtlich der Arbeitsbedingungen u. ä. von der Umwelt isoliert werden müssen.

## Zugrundeliegender Stand der Technik

In den Wärmeaustauschapparaten von dem genannten Typ erfolgt die Wärmeabführung von dem Gasstrom, der als Hauptstrom bezeichnet wird, durch eine Trennwand zu einer Flüssigkeit, die durch Verdampfung in einem anderen Gasstrom abgekühlt wird, der als Hilfsstrom bezeichnet wird. Die durch Verdampfung abzukühlende Flüssigkeit befindet sich an der Trennwand entweder: in Form eines Dünnfilms, oder in einem kapillarporigen Stoff, mit dem die Oberfläche der Trennwand überzogen ist. Von den Oberflächen der Trennwand werden Kanäle gebildet, durch welche an einer Seite das abzukühlende Gas als Hauptstrom und an der anderen Seite ein Kühlgas als Hilfsstrom fließen. Der Kanal, durch welchen der Hauptstrom fließt, wird als Trockenkanal bezeichnet, weil er von feuchtigkeitsundurchlässigen Wänden gebildet ist, während der Kanal, durch welchen der Hilfsstrom fließt, als Naßkanal bezeichnet wird, weil er von naßen Wänden, d. h. von den mit einem dünnen Flüssigkeitsfilm oder einem benetzbaren kapillarporigen Stoff überzogenen Wänden gebildet ist.

Das Basisverfahren zur indirekten Verdampfungskühlung besteht darin, daß man das abzukühlende Gas durch einen Trockenkanal in Berührung mit der Austauschfläche einer Trennwand und gleichzeitig durch einen Naßkanal im Gegenstrom ein Kühlgas durchläßt, in dessen Strom eine Verdampfung der Flüssigkeit von der naßen Oberfläche derselben Trennwand stattfindet, wobei die genannten Kanäle in einem Wärmeaustauschverhältnis miteinander stehen.

- 2 -

Es ist ein Verfahren zur indirekten Verdampfungskühlung der Luft (SU, A, 979796) bekannt, welches darin besteht, daß man die Luft abkühlt, indem man deren Hauptstrom durch einen Trockenkanal unter gleichzeitiger Durchlassung eines Hilfsluftstromes im Gegenstrom durch einen Naßkanal durchläßt, der mit dem genannten Trockenkanal in einem Wärmeaustauschverhältnis steht.

Genauer gesagt wird der Hilfsluftstrom durch Aufteilung des Gesamtstromes in einen Haupt- und einen Hilfsstrom erhalten, indem der Hilfsstrom in den Naßkanal im Gegenstrom relativ zu dem Hauptstrom abgeleitet wird.

Das bekannte Verfahren weist eine Reihe von Beschränkungen auf. Eine wesentliche Beschränkung besteht darin, daß in diesem Verfahren die Luft durch einen Rückumlauf nicht abgekühlt werden kann, was zu einem erhöhten Energieaufwand und zu einer Verunreinigung des Hauptluftstromes durch die Außenluft führt, wenn auch dies aufgrund der Arbeitsschutzbedingungen nicht zulässig ist.

Eine weitere Beschränkung des bekannten Verfahrens besteht in einer nicht ausreichend intensiven Verdampfung der Feuchtigkeit im Naßkanal, was sich auf die Abkühlungswirksamkeit negativ auswirkt.

## Offenbarung der Erfindung

Der Erfindung liegt die Aufgabe zugrunde, ein Verfahren zur indirekten Verdampfungskühlung der Luft zu entwickeln, bei dem durch eine Erhöhung des Massenaustausches im Naßkanal für den Hilfsstrom eine Erhöhung der Abkühlungswirksamkeit erzielt wird.

Die gestellte Aufgabe wird dadurch gelöst, daß bei einem Verfahren zur indirekten Verdampfungskühlung der Luft, welches darin besteht, daß die Luft abgekühlt wird, indem dessen Hauptstrom durch einen Trockenkanal unter gleichzeitiger Durchlassung eines Hilfsluftstromes im Gegenstrom durch einen Naßkanal, der mit dem genannten Trockenkanal in einem Wärmeaustauschverhältnis steht, durchgelassen wird, erfindungsgemäß der Hilfsluftstrom vorgekühlt wird, indem dieser durch einen anderen

- 3 -

Trockenkanal durchgelassen wird, der in einem Wärmeaustauschverhältnis mit einem anderen Naßkanal steht, durch welchen ein Teil der abgekühlten Luft im Gegenstrom durchgelassen wird, die dem Hauptstrom entnommen ist, wobei der Hilfsluftstrom durch Absaugen der Luft aus dem Naßkanal in Bewegung gesetzt wird.

Dadurch, daß der Hilfsluftstrom vorgekühlt und durch Absaugen aus einem Naßkanal in Bewegung gesetzt wird, wird eine Abkühlung des Hauptluftstromes bis auf den Taupunkt der Außenluft gewährleistet.

Kurze Beschreibung der Zeichnungen

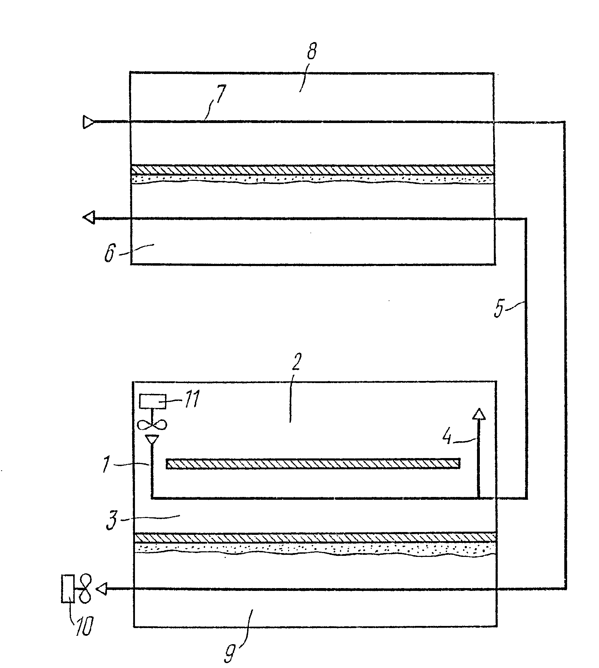

Nachstehend wird die Erfindung durch die Beschreibung eines bevorzugten Durchführungsbeispiels derselben unter Bezugnahme auf die beigefügte Zeichnung erläutert, die ein Schema der Durchführung des erfindungsgemäßen Verfahrens darstellt.

Beste Durchführungsvariante der Erfindung

Die nachstehend angeführte eingehende Beschreibung des erfindungsgemäßen Verfahrens beruht auf einem Beispiel der Luftabkühlung in einem isolierten Raum, d. h., in einem solchen Raum, wo keine Luftzufuhr von außen vorgesehen ist.

Wie das beigefügte Schema zeigt, wird der Strom 1 der abzukühlenden Luft einem Raum 2 entnommen und in einen Trockenkanal 3 geführt. Der abgekühlte Luftstrom 4, der aus dem durch den Trockenkanal 3 geführten Strom 1 abgesondert ist, wird in den Raum 2 zurückgeführt, während der übrige Strom 5 der abgekühlten Luft als Hilfsstrom in einen Naßkanal 6 geleitet wird.

Der Hilfsstrom 7 fließt in einem Trockenkanal 8, der in einem Wärmeaustauschverhältnis mit dem Kanal 6 steht, im Gegenstrom relativ zu dem Strom 5, der durch den Naßkanal 6 fließt. Der Strom 7 wird der Atmosphäre entnommen. Dann gelangt der Hilfsstrom 7 aus dem Trockenkanal 8 in einen Naßkanal 9, der in einem Wärmeaustauschverhältnis mit dem Trockenkanal 3 steht. Die Bewegung des Hilfsstromes 7 vollzieht sich durch Absaugen desselben aus dem Naßkanal 9, wozu am Austritt aus dem Kanal 9 ein Absaug-

- 4 -

gebläse 10 angebracht ist. Der Hauptstrom 1 und dessen abgezweigter Strom 4 laufen im Raum 2 mittels eines Lüfters 11 um.

Der Hauptstrom 1 der abzukühlenden Luft wird dem Raum 2 entnommen und mittels des Lüfters 11 in den Trockenkanal 3 eingeleitet. Bei der Berührung mit der Wärmeaustauschfläche des Kanals 3 wird die Luft ohne Änderung ihres Feuchtigkeitsgehaltes abgekühlt, wonach der Luftstrom in zwei Ströme 4 und 5 aufgeteilt wird. Der Luftstrom 4 wird in den Raum 2 zurückgeführt, und der Luftstrom 5 strömt durch den Kanal 6, wo er die Funktionen eines Hilfsstromes zur Abkühlung des Stromes 7 im Kanal 6 ausübt. Da als Hilfsstrom zur Abkühlung des Stromes 7 nicht die Außenluft, welche unmittelbar der Atmosphäre entnommen ist, sondern der vorgekühlte Strom 5 dient, führt das seinerseits eine Abkühlung des Stromes 7 in einem Bereich bis auf den Taupunkt der Außenluft ohne Änderung des Feuchtigkeitsgehaltes derselben herbei. Der abgekühlte Strom 7 der Außenluft wird mit diesen Kenndaten als Hilfsstrom mittels des Absauggebläses 10 im Gegenstrom in den Naßkanal 9 eingesaugt. Der erwärmte und befeuchtete Strom 5 wird aus dem Naßkanal 6 in die Atmosphäre abgeführt.

Somit fließt durch den Trockenkanal 3 der Luftstrom 1, während durch den Naßkanal 9 der vorgekühlte Strom 7 der Außenluft im Gegenstrom fließt, der die Funktionen eines Hilfsstromes ausübt. Im Ergebnis des Wärme- und Massenaustausches zwischen diesen Strömen findet eine indirekte Verdampfungsabkühlung des Stromes 1 aus dem Raum 2 statt, was, letzten Endes, am Ende des Prozesses zu einer Temperatursenkung desselben in einem Bereich bis auf den Taupunkt der Außenluft ohne Änderung des Feuchtigkeitsgehaltes führt. Der Luftstrom 7, der durch die Wärmeabführung von dem Strom 1 erwärmt und durch die Feuchtigkeitsverdampfung von der Wärmeaustauschfläche des Naßkanals 9 befeuchtet wird, wird dabei mittels des Absauggebläses 10 in die Atmosphäre abgesaugt.

Bei dem erfindungsgemäßen Verfahren zur Verdampfungskühlung der Luft im Raum wird der Strom 7 der Außenluft durch Einsaugen zuerst durch den Trockenkanal 8 und dann durch den Naßkanal 3 geführt. Während des Fließens dieses Luftstromes durch die Kanäle 8 und 3 werden immer aerodynamische Druckverluste bestehen, die durch verschiedene Widerstände hervorgerufen werden. Deshalb wird die Druckhöhe des Luftstromes 7 je nach der Vorwärtsbewegung desselben zuerst durch den Trockenkanal 8 und dann durch den Naßkanal 9 abnehmen. Die Verminderung der Druckhöhe des Luftstromes 7 führt zu einer Verminderung des Partialdruckes der Wasserdämpfe in diesem Strom. Das fördert, seinerseits, eine wirksamere Verdampfung der Wasserdämpfe von der nassen Wand des Kanals 9 in den Luftstrom 7, wodurch der kälteerzeugende Prozeß der Verdampfungskühlung verstärkt wird. Die Verminderung der Druckhöhe des Luftstromes 7 führt außerdem zu einer niederen Sättigungstemperatur der Wasserdämpfe, was, seinerseits, eine niedrigere Temperatur dieses Luftstromes zur Folge hat, der die Funktionen eines Hilfsstromes bei der Durchführung des Verfahrens zur indirekten Verdampfungskühlung ausübt. Im Ergebnis führen diese Faktoren zu einer Erhöhung der Wirksamkeit der Abkühlung der Luft in einem Raum, weil dabei die Intensität des kälteerzeugenden Prozesses zunimmt und die Grenztemperatur der abzukühlenden Luft im Raum sinkt. Diese Temperatur kann sogar unter dem Taupunkt der Außenluft beim atmosphärischen Druck liegen, weil der Druck des Gesamtstromes 7 der Luft in diesem Fall (insbesondere im Naßkanal 9) unter dem atmosphärischen Druck liegt.

Bei dem erfindungsgemäßen Verfahren ist es zweckmäßig, zu einer Erhöhung des Effektes der Verdampfungskühlung zusätzliche Strömungswiderstände in der Strömung des Stromes 7 zu schaffen. Der zusätzliche Energieaufwand für das Absauggebläse 10 wird dabei in vielen Fällen bedeutend geringer, als die Größe des positiven Effektes sein, der bei erhöhter Wasserverdampfung in einem stärker verdünnten Luftstrom 7 erhalten wird. Die zusätzlichen Strömungswiderstände können z. B. durch Verwendung verschiedener poröser oder entfalteter Wärmeaustauschflä-

chen erzeugt werden. Dadurch wird ein zusätzlicher Effekt erzielt, weil eine höhere Verdünnung im Luftstrom 7 erzeugt wird und die Wärme- und Massenaustauschflächen zwischen den Strömen vergrößert werden. Das führt zu einer Verminderung der Abmessungen des Apparates zur Durchführung des erfindungsgemäßen Verfahrens und, letzten Endes, zu einer Erhöhung der Wirksamkeit der Abkühlung der Luft in einem Raum.

Schließlich trägt die beim Absaugen des Luftstromes 7 zu erzeugende Verdünnung dazu bei, daß die Oberflächen des Naßkanals 9 besser benetzt werden. Die nassen Oberflächen werden im wesentlichen aus kapillarporigen Stoffen angefertigt, die mit Wasser infolge des Kapillaranstieges benetzt werden. Die in diesem Fall entstehende Verdünnung trägt dazu bei, daß die Anstieghöhe und die Geschwindigkeit des Flüssigkeitsanstieges vergrößert werden, wodurch ebenfalls eine Erhöhung der Wirksamkeit der Luftabkühlung in einem Raum ermöglicht wird.

Auf diese Weise gestattet das erfindungsgemäße Verfahren zur Abkühlung der Luft in einem Raum es, die Wirksamkeit der Abkühlung durch eine Intensivierung des Massenaustausches im Naßkanal 9 wesentlich zu erhöhen sowie die Bedingungen für die Benetzbarkeit der nassen Wärmeaustauschflächen unter Ausnutzung des natürlichen psychometrischen Temperaturunterschiedes zu verbessern.

Gewerbliche Anwendbarkeit

Das Verfahren zur indirekten Verdampfungskühlung der Luft kann zur Luftkühlung in von der Umgebung isolierten Räumen, wo keine Luftzufuhr vorgesehen ist, angewendet werden. Als solche Räume können aus technologischen Gründen oder aus Arbeitsschutzbedingungen isolierte Produktionsräume sowie beliebige andere Räume auftreten, die in Extremalverhältnisse z. B. bei einer Verseuchung der Umgebung infolge eines Havariefalls unter Entweichen von radioaktiven oder chemischen Stoffen geraten.

- 7 -

PATENTANSPRUCH

Verfahren zur indirekten Verdampfungskühlung von Luft, welches darin besteht, daß die Luft abgekühlt wird, indem deren Hauptstrom (1) durch einen Trockenkanal (3) unter gleichzeitiger Durchleitung eines Hilfsluftstromes (7) im Gegenstrom durch einen Naßkanal (9), der mit dem genannten Trockenkanal (3) in einem Wärmeaustauschverhältnis steht, durchgelassen wird, dadurch g e k e n n - z e i c h n e t , daß der Hilfsluftstrom (7) vorgekühlt wird, indem dieser durch einen anderen Trockenkanal (5) durchgelassen wird, der in einem Wärmeaustauschverhältnis mit einem anderen Naßkanal (6) steht, durch welchen ein Teil (5) der abgekühlten Luft im Gegenstrom durchgelassen wird, die dem Hauptstrom (1) entnommen ist, wobei der Hilfsstrom (7) der Luft durch Absaugen derselben aus dem Naßkanal (9) in Bewegung gesetzt wird.

# INTERNATIONAL SEARCH REPORT

International Application No  PCT/SU88/00168

## I. CLASSIFICATION OF SUBJECT MATTER (if several classification symbols apply, Indicate all) 6

According to International Patent Classification (IPC) or to both National Classification and IPC

| Int.Cl.4 | F24F 3/14 |
|----------|-----------|

## II. FIELDS SEARCHED

| Minimum Documentation Searched 7 | |
|---|---|
| Classification System | Classification Symbols |
| Int.Cl.4 | F24F 3/14,3/147 ; 28C 3/02,3/08; F28D 5/00 |

Documentation Searched other than Minimum Documentation
to the Extent that such Documents are Included In the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US,A1, 976796 (ODESSKY INZHENERNOSTROITELNY INSTITUT) , 17 December 1982(17.12.82) see figures 1-3, cited in the description | 1 |
| A | SU,A1, 1262209 (A.B. TSIMERMAN et al) 7 October 1986 (07.10.86) see figure 2 | 1 |
| A | GB,B, 1504385 (J. MANN AND SON LIMITED) 22 March 1978(22.03.78) see figure 1 | |
| A | US,A, 2990696 (STEWART-WARNER CORPORATION) 4 July 1961 (04.07.61) see the claims, figures 1-8 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 11 April 1989 (11.04.89) | 24 May 1989 (24.05.89) |
| International Searching Authority | Signature of Authorized Officer |
| ISA/SU | |

Form PCT/ISA/210 (second sheet) (January 1985)